# EUROPÄISCHE PATENTANMELDUNG

(11) **EP 3 984 341 A1**
(43) Veröffentlichungstag der Anmeldung: **20.04.2022**
(21) Anmeldenummer: 21401038.1
(22) Anmeldetag: 05.10.2021
(51) Int. Cl.: A01B 69/00

(54) **SYSTEM ZUM ERFASSEN VON PFLANZENREIHEN**

(30) Priorität: 14.10.2020 DE 102020126960
(71) Anmelder: Amazonen-Werke H. Dreyer SE & Co. KG, 49205 Hasbergen (DE)
(72) Erfinder: Mahler, Tom, 04249 Leipzig (DE)

(57) **Zusammenfassung**

Die Erfindung betrifft ein System (10) zum Erfassen von Pflanzenreihen (R1-R12) auf einer landwirtschaftlichen Nutzfläche, mit zumindest einer Kamera (12), welche dazu eingerichtet ist, auf einen Pflanzenbestand (B) ausgerichtet zu werden und ein den Pflanzenbestand (B) betreffendes Bildsignal (14) und/oder den Pflanzenbestand (B) betreffende Bildaufnahmen (16) zu erzeugen, einer Verstelleinrichtung (22), welche einen oder mehrere Verstellantriebe (24a, 24b) aufweist, mittels welchen die Neigung (α) und/oder Höhe (H) der Kamera (12) veränderbar ist, und einer elektronischen Auswerteeinheit (18), welche dazu eingerichtet, das von der Kamera (12) erzeugte Bildsignal (14) und/oder die von der Kamera (12) erzeugten Bildaufnahmen (16) zum Erfassen des Verlaufs und/oder der Position von Pflanzenreihen (R1-R12) auf einer landwirtschaftlichen Nutzfläche auszuwerten.

## Beschreibung

Die Erfindung betrifft ein System zum Erfassen von Pflanzenreihen auf einer landwirtschaftlichen Nutzfläche nach dem Oberbegriff des Patentanspruchs 1, eine landwirtschaftliche Bearbeitungsmaschine nach dem Oberbegriff des Patentanspruchs 7 und ein Verfahren zum Erfassen von Pflanzenreihen auf einer landwirtschaftlichen Nutzfläche nach dem Oberbegriff des Patentanspruchs 8.

Zur Reihenerfassung auf einer landwirtschaftlichen Nutzfläche werden vermehrt Kameras eingesetzt, welche an einem Traktor oder einem Anbaugerät befestigt und während des Bearbeitungsvorgangs auf den Pflanzenbestand ausgerichtet sind. Über eine Auswertung des Bildsignals der Kamera und/oder der von der Kamera erzeugten Bildaufnahmen lässt sich der Verlauf von Pflanzenreihen vergleichsweise präzise ermitteln.

Der Kamerablickwinkel und die Kamerahöhe sind dabei bisher durch den Anwender vor Beginn des Bearbeitungsvorgangs manuell einzustellen. Eine Kameraneigung, bei welcher die optische Achse der Kameraoptik steil nach unten weist, ist beispielsweise bei einem Pflanzenbestand mit einem hohen Anteil an kurvigen Reihenverläufen vorteilhaft, da das technische System aus optischer Erfassung, Software und Aktoren auf diese Weise besser bzw. direkter auf dem Reihenverlauf reagieren kann. Eine Kameraneigung, bei welcher die optische Achse der Kameraoptik flach nach vorne weist, ist bei einem Pflanzenbestand mit einem hohen Anteil an geradlinig verlaufenden Reihen vorteilhaft, da die Reihen auf diese Weise zuverlässiger erkannt werden können.

Die Druckschrift DE 10 2007 113 726 A1 schlägt die Verwendung einer schwenkbaren und höhenverstellbaren Kamera an einer landwirtschaftlichen Hacke vor. Die Kameraneigung und die Kamerahöhe können vor dem Bearbeitungsvorgang auf den Zustand und/oder den Typ der sich auf der landwirtschaftlichen Nutzfläche befindenden Nutzpflanzen eingestellt werden.

Bei solchen Systemen orientiert sich der Anwender in der Praxis bei der Einstellung der Kameraneigung und der Kamerahöhe an der Anbaukultur und dessen Entwicklungsstand. Bei kleinen Rübenpflanzen ist beispielsweise eine geringe Kamerahöhe vorteilhaft, wobei bei hohen Maispflanzen eine größere Kamerahöhe zu bevorzugen ist.

Aus der Druckschrift DE 10 2017 217 391 A1 ist ferner ein Kamerasystem bekannt, mittels welchem ein landwirtschaftliches Gerät entlang einer Fahrspur geführt werden kann. Die Verstellung der Kameraneigung wird hierbei mittels einer Aktorik umgesetzt, wobei die Kameraneigung abhängig von der Arbeitsbreite des eingesetzten Anbaugeräts eingestellt wird.

Darüber hinaus ist aus der Druckschrift DE 10 2018 217 742 A1 ein System zum Erfassen von Pflanzenreihen bekannt, bei welchem eine unbeweglich angeordnete Kamera eingesetzt wird. Während des Bearbeitungsvorgangs wird hier der Auswerteabschnitt angepasst, um eine möglichst präzise Reihenerfassung zu erreichen.

Bei den bekannten Pflanzenreihenerfassungssystemen kann die Kamerahöhe und die Kameraausrichtung bisher nicht während des Bearbeitungsvorgangs bedarfsgerecht an die aktuelle Bearbeitungssituation oder an Bestandseigenschaften angepasst werden. Die eingestellte Kamerahöhe und die ausgewählte Kameraneigung stellen also bisher stets einen Kompromiss dar, welcher zu einer akzeptablen Erfassungspräzision in den unterschiedlichen Bearbeitungssituationen führt.

In einer Vielzahl von Anwendungsbereichen könnte die Bearbeitungsqualität jedoch weiter verbessert werden, wenn der Verlauf und/oder die Positionen der Pflanzenreihen mit einer höheren Präzision erfasst werden. Die der Erfindung zugrundeliegende Aufgabe besteht somit darin, die Präzision bei der kameragestützten Reihenerfassung weiter zu erhöhen.

Die Aufgabe wird gelöst durch ein System der eingangs genannten Art, wobei das erfindungsgemäße System eine elektronische Steuerungseinrichtung aufweist, welche dazu eingerichtet ist, durch eine Ansteuerung des einen oder der mehreren Verstellantriebe der Verstelleinrichtung selbsttätig die Einstellung einer situationsspezifischen und in Bezug auf die Reihenerfassung optimierten Höhe und/oder Neigung der Kamera zu veranlassen.

Die Erfindung macht sich die Erkenntnis zunutze, dass durch eine derartige Ansteuerung des einen oder der mehreren Verstellantriebe ein den Pflanzenbestand betreffendes Bildsignal und/oder den Pflanzenbestand betreffende Bildaufnahmen von der Kamera erzeugt werden können, welche eine erhebliche Steigerung hinsichtlich der Präzision der Reihenerfassung erlauben. Ferner entfällt die Notwendigkeit eines manuellen Eingreifens durch den Anwender, um den Blickwinkel in Fahrtrichtung und/oder die Höhe der Kamera auf die aktuelle Situation anzupassen. Die Anpassung des Blickwinkels und der Höhe der Kamera wird durch die elektronische Steuerungseinrichtung automatisch veranlasst. Durch die elektronische Steuerungseinrichtung werden die optimalen Bedingungen für die Einstellung der Kamera ermittelt und durch eine entsprechende automatisierte Anpassung eingestellt. Der Blickwinkel und/oder die Höhe der Kamera über dem Boden kann durch eine geeignete Ansteuerung der Verstellantriebe während des Bearbeitungsvorgangs auf die aktuellen Gegebenheiten angepasst werden. Die elektronische Auswerteeinheit kann beispielsweise Bestandteil der elektronischen Steuerungseinrichtung sein.

In einer bevorzugten Ausführungsform des erfindungsgemäßen Systems ist die elektronische Steuerungseinrichtung dazu eingerichtet, die situationsspezifische und in Bezug auf die Reihenerfassung optimierte Höhe und/oder Neigung der Kamera auf Grundlage von einer oder mehreren den Pflanzenbestand betreffenden aktuellen Bestandseigenschaften zu ermitteln. Die Bestandseigenschaften können den Reihenverlauf in Fahrtrichtung betreffen. Beispielsweise könnte der Blickwinkel der Kamera in einem Bereich mit geradlinigem Reihenverlauf weit nach vorne gerichtet sein. Sobald aber ein kurviger Reihenverlauf, beispielsweise aufgrund eines Hindernisses, erfasst wird, könnte die Kameraneigung so angepasst werden, dass die optische Achse der Kameraoptik steil nach unten weist. Somit werden die Möglichkeiten der kamerabasierten Reihenerfassung optimal ausgenutzt. Zudem werden Einstellungsfehler durch den Anwender vermieden. Zudem entfällt die Einstellungsarbeit vor Fahrtantritt. Die Bestandseigenschaften können ferner die aktuelle Bestandshöhe des Pflanzenbestandes betreffen. Außerdem können die Bestandseigenschaften auch den Reihenabstand und/oder den Pflanzenabstand betreffen. Alternativ oder zusätzlich kann die elektronische Steuerungseinrichtung dazu eingerichtet sein, die situationsspezifische und in Bezug auf die Reihenerfassung optimierte Höhe und/oder Neigung der Kamera auf Grundlage von einer oder mehreren die Pflanzen des Pflanzenbestands betreffenden aktuellen Pflanzeneigenschaften zu ermitteln. Die Pflanzeneigenschaften können die aktuelle Wuchshöhe und/oder die aktuelle Wuchsbreite der Pflanzen betreffen. Ferner können die Pflanzeneigenschaften auch den aktuellen Pflanzendurchmesser betreffen. Die Pflanzeneigenschaften können auch die Pflanzenart betreffen. Vorzugsweise verwendet die elektronische Steuerungseinrichtung ein Bildverarbeitungsprogramm, mittels welchem das von der Kamera erzeugte Bildsignal und/oder die von der Kamera erzeugten Bildaufnahmen zum Ermitteln des Bestandszustands und/oder des Pflanzenzustands ausgewertet werden können.

Das System kann dabei eine oder mehrere Kameras umfassen. Die von den jeweiligen Kameras erzeugten Bildsignale bzw. die von den jeweiligen Kameras erzeugten Bildaufnahmen können dabei gemeinsam oder separat voneinander ausgewertet werden. Die zumindest eine Kamera kann beispielsweise eine 2D-Kamera oder eine 3D-Kamera sein. Ferner kann die Kamera eine Stereokamera oder eine Zeilenkamera, welche Tiefeninformationen liefert, sein.

In einer anderen Ausführungsform des erfindungsgemäßen Systems ist die elektronische Steuerungseinrichtung dazu eingerichtet, die eine oder die mehreren Bestandseigenschaften und/oder die eine oder die mehreren Pflanzeneigenschaften auf Grundlage des von der Kamera erzeugten Bildsignals und/oder auf Grundlage der von der Kamera erzeugten Bildaufnahmen zu ermitteln. Die Kamera kann die Pflanzenreihen im Kamera-Blickfeld erfassen. Die Steuerungseinrichtung kann dann eine Kurve ermitteln, auf welcher sich die erfassten Pflanzen befinden, sodass die Kurve den tatsächlichen Reihenverlauf wiedergibt. Die Steuerungseinrichtung kann dann eine gemittelte Gerade ermitteln, deren Abstand von dem Verlauf der zuvor ermittelten Kurve möglichst gering ist. Eine derartige Gerade kann auch als Bestfit-Gerade bezeichnet werden. Im Nachgang kann dann die Steuerungseinrichtung den Abstand der gemittelten Gerade zum tatsächlichen Reihenverlauf ermitteln. Die Standardabweichung dieser Abstandsdifferenz kann als Parameter genutzt werden, um die Neigung und somit den Blickwinkel der Kamera mittels eines Verstellantriebs einzustellen. Bei einer hohen Standardabweichung ist ein kurviger Verlauf der Pflanzenreihen vorhanden. In diesem Fall wird der Blickwinkel der Kamera so eingestellt, dass die Kamera steil in Fahrtrichtung nach unten schaut. Somit kann dem kurvigen Verlauf besser gefolgt werden. Wenn die Standardabweichung gering ist, d. h. der Verlauf der Pflanzenreihen vergleichsweise geradlinig ist, kann der Blickwinkel so eingestellt werden, dass die Kamera flach nach vorne schaut. Das sich ergebende Blickfeld der Kamera hat den Vorteil, dass zum Beispiel Fehlstellen im Pflanzenbestand als solche erkannt werden können, weil bei der Reihenerfassung eine größere Anzahl von Pflanzen berücksichtigt wird. Für die Einstellung der Kamerahöhe kann die elektronische Steuerungseinrichtung auch die Bestandshöhe oder eine Pflanzenhöhe und/oder einen Pflanzendurchmesser bestimmen. Zudem kann durch den Anwender vorgegeben werden, wie viele Reihen die Kamera zur Auswertung verwenden soll.

Die Steuerungseinrichtung kann dazu eingerichtet sein, einen vorgegebenen Zusammenhang zwischen Eigenschaften des Reihenverlaufs, der Bestandshöhe des Pflanzenbestands, des Reihenabstands, des Pflanzenabstands, der Wuchshöhe der Pflanzen, der Wuchsbreite der Pflanzen, des Pflanzendurchmessers und/oder der Pflanzenart einerseits und der einzustellenden Kamerahöhe und/oder Kameraneigung anderseits zum Ermitteln der situationsspezifischen und in Bezug auf die Reihenerfassung optimierten Höhe und/oder Neigung der Kamera zu nutzen. Das Ermitteln der situationsspezifischen und in Bezug auf die Reihenerfassung optimierten Höhe und/oder Neigung der Kamera kann auf Grundlage einer Berechnung oder auf Grundlage eines Kennfeldes erfolgen.

Der eine oder die mehreren Verstellantriebe der Verstelleinrichtung können beispielsweise Elektromotoren sein. Beispielsweise kann mit einem Elektromotor die Kamera in Vertikalrichtung verfahren werden. Vorzugsweise kann mit einem weiteren Elektromotor der Neigungswinkel bzw. der Anstellwinkel der Kamera und somit der Kamera-Blickwinkel in Fahrtrichtung eingestellt werden.

Vorzugsweise ist die elektronische Auswerteeinheit dazu eingerichtet, das Bildsignal und/oder die Bildaufnahmen der Kamera zum Erfassen von Höhen- und Reiheninformationen auszuwerten. Dies kann beispielsweise dadurch erfolgen, dass der Abstand zu mehreren Punkten quer und/oder längs zur Fahrtrichtung bestimmt wird. Aus diesen Abstandsinformationen kann ein Höhenabstand zur Kamera berechnet werden. Aus den quer zur Fahrtrichtung liegenden Höheninformationen kann die Position bzw. die Lage der Reihen in Bezug auf die Kamera ermittelt werden. Die Höheninformationen können dann z.B. auch zur Regelung der Höhe eines Gestänges genutzt werden, wenn das System an einer landwirtschaftlichen Spritzeinrichtung mit einem sich quer zur Fahrtrichtung erstreckenden Spritzgestänge zum Einsatz kommt. Gleichzeitig kann die Maschine oder ein Teil der Maschine dann reihenbezogen geführt werden. Die Kamera wird also eingesetzt, um Höhen- und Reiheninformationen zu erzeugen. Aus den Abstandsinformationen, welche aus dem Bildsignal und/oder den Bildaufnahmen der Kamera abgeleitet werden, kann beispielsweise die aktuelle Gestängehöhe und die Lage der Maschine zu den Pflanzenreihen berechnet werden.

In einer weiteren bevorzugten Ausführungsform weist das erfindungsgemäße System einen oder mehrere Sensoren zur Bewuchserfassung auf, wobei die elektronische Steuerungseinrichtung dazu eingerichtet ist, die eine oder die mehreren Bestandseigenschaften und/oder die eine oder die mehreren Pflanzeneigenschaften auf Grundlage der von dem einen oder den mehreren Sensoren zur Verfügung gestellten Sensordaten zu ermitteln. Die Sensoren zur Bewuchserfassung können Kontaktsensoren, insbesondere Tastsensoren, sein. Ferner können die Sensoren zur Bewuchserfassung berührungslos arbeitende Sensoren, wie beispielsweise Ultraschallsensoren oder Radarsensoren, sein. Die Sensordaten können sich auf die Wuchshöhe der Pflanzen oder die Bestandshöhe des Pflanzenbestandes beziehen.

Es ist außerdem ein erfindungsgemäßes System bevorzugt, bei welchem die elektronische Steuerungseinrichtung dazu eingerichtet ist, die aktuelle Güte der Reihenerfassung anhand des von der Kamera erzeugten Bildsignals und/oder der von der Kamera erzeugten Bildaufnahmen zu bestimmen und die situationsspezifische und in Bezug auf die Reihenerfassung optimierte Höhe und/oder Neigung der Kamera auf Grundlage der aktuellen Güte der Reihenerfassung zu ermitteln. Wenn die Güte der Reihenerfassung gering ist, weist dies darauf hin, dass die Kamerahöhe und/oder die Kameraneigung für die aktuelle Erfassungssituation ungeeignet ist. Wenn die Güte der Reihenerfassung hoch ist, ist für die aktuelle Erfassungssituation eine geeignete Kamerahöhe und/oder eine geeignete Kameraneigung eingestellt. Die Güte der Reihenerfassung kann beispielsweise auch durch Umweltparameter, wie beispielsweise die wetterbedingte Sichtweite der Kamera beeinflusst werden. Somit kann die Güte der Reihenerfassung beispielsweise durch starken Nebel oder Niederschlag erheblich beeinträchtigt werden, sodass eine nebel- und/oder niederschlagsbedingte Anpassung der Kamerahöhe und/oder der Kameraneigung durch die elektronische Steuerungseinrichtung veranlasst wird.

Es ist außerdem ein erfindungsgemäßes System vorteilhaft, bei welchem die elektronische Steuerungseinrichtung dazu eingerichtet ist, zum Bestimmen der aktuellen Güte der Reihenerfassung die Erfassungsqualität bei der Pflanzenerfassung zu bewerten, insbesondere durch einen Abgleich des von der Kamera erzeugten Bildsignals und/oder der von der Kamera erzeugten Bildaufnahmen mit Referenzdaten. Die Referenzdaten können auf einem Datenspeicher des Systems hinterlegt sein. Die Referenzdaten können Beispielbilder einer Pflanze sein. Beispielsweise können auf dem Datenspeicher des Systems Beispielbilder unterschiedlicher Pflanzen hinterlegt sein. Zu einer Pflanze können auch mehrere Beispielbilder hinterlegt sein, welche die Pflanze in unterschiedlichen Entwicklungszuständen zeigen. Die elektronische Steuerungseinrichtung kann dazu eingerichtet sein, diese Beispielbilder im Rahmen der Bewertung der Erfassungsqualität mit den Bildaufnahmen der Kamera zu vergleichen. Auf Basis des Bildvergleichs wird dann ein Matchfaktor berechnet, über welchen beurteilt werden kann, wie präzise die Pflanzenerkennung arbeitet. Falls die elektronische Steuerungseinrichtung erkennt, dass die Pflanzenerkennung mit einer nicht ausreichenden Erfassungsqualität arbeitet, können Kamerahöhe und/oder Kameraneigung, also Blickwinkel, nach vorher empirisch ermittelten Prozeduren angepasst werden.

Die der Erfindung zugrundeliegende Aufgabe wird ferner durch eine landwirtschaftliche Bearbeitungsmaschine der eingangs genannten Art gelöst, wobei das System zum Erfassen von Pflanzenreihen der erfindungsgemäßen landwirtschaftlichen Bearbeitungsmaschine nach einer der vorstehend beschriebenen Ausführungsformen ausgebildet ist. Hinsichtlich der Vorteile und Modifikationen der erfindungsgemäßen landwirtschaftlichen Bearbeitungsmaschine wird somit zunächst auf die Vorteile und Modifikationen des erfindungsgemäßen Systems zum Erfassen von Pflanzenreihen verwiesen.

Die landwirtschaftliche Bearbeitungsmaschine kann beispielsweise ein Anbaugerät, insbesondere ein Frontanbaugerät oder ein Heckanbaugerät sein. Die landwirtschaftliche Bearbeitungsmaschine kann beispielsweise eine Hackmaschine oder eine Feldspritze sein.

Die der Erfindung zugrundeliegende Aufgabe wird ferner durch ein Verfahren der eingangs genannten Art gelöst, wobei im Rahmen des erfindungsgemäßen Verfahrens ein selbsttätiges Veranlassen der Einstellung einer situationsspezifischen und in Bezug auf die Reihenerfassung optimierten Höhe und/oder Neigung der Kamera mittels einer elektronischen Steuerungseinrichtung durch Ansteuern von einem oder mehreren Verstellantrieben einer Verstelleinrichtung erfolgt, wobei mittels des einen oder der mehreren Verstellantriebe die Neigung und/oder die Höhe der Kamera veränderbar ist. Das Verfahren zum Erfassen von Pflanzenreihen wird vorzugsweise mit einem System nach einer der vorstehend beschriebenen Ausführungsformen ausgeführt. Insofern wird hinsichtlich der Vorteile und Modifikationen des erfindungsgemäßen Verfahrens zunächst auf die Vorteile und Modifikationen des erfindungsgemäßen Systems verwiesen.

In einer bevorzugten Ausführungsform des erfindungsgemäßen Verfahrens wird eine oder werden mehrere den Pflanzenbestand betreffende aktuelle Bestandseigenschaften ermittelt. Alternativ oder zusätzlich wird eine oder werden mehrere die Pflanzen des Pflanzenbestands betreffende aktuelle Pflanzeneigenschaften ermittelt. Vorzugsweise erfolgt ein Ermitteln der situationsspezifischen und in Bezug auf die Reihenerfassung optimierten Höhe und/oder Neigung der Kamera durch die elektronische Steuerungseinrichtung auf Grundlage der einen oder der mehreren Bestandseigenschaften und/oder der einen oder der mehreren Pflanzeneigenschaften. Das Ermitteln der Bestandseigenschaften bzw. das Ermitteln der Pflanzeneigenschaften kann das Ermitteln des Reihenverlaufs, der Bestandshöhe des Pflanzenbestands, des Reihenabstands, des Pflanzenabstands, der Wuchshöhe der Pflanzen, der Wuchsbreite der Pflanzen, des Pflanzendurchmessers und/oder der Pflanzenart umfassen.

Das Ermitteln der Bestandseigenschaften und/oder der Pflanzeneigenschaften erfolgt unter Verwendung eines Bildbearbeitungsprogramms, welches das von der Kamera erzeugte Bildsignal und/oder die von der Kamera erzeugten Bildaufnahmen auswertet. Die elektronische Steuerungseinrichtung kann die eine oder die mehreren Bestandseigenschaften und/oder die eine oder die mehreren Pflanzeneigenschaften also auf Grundlage des von der Kamera erzeugten Bildsignals und/oder auf Grundlage der von der Kamera erzeugten Bildaufnahmen ermitteln. Alternativ und zusätzlich kann die elektronische Steuerungseinrichtung die eine oder die mehreren Bestandseigenschaften und/oder die eine oder die mehreren Pflanzeneigenschaften auch auf Grundlage von Sensordaten von einem oder mehreren Sensoren zur Bewuchserfassung ermitteln.

In einer bevorzugten Ausführungsform des erfindungsgemäßen Verfahrens erfolgt ein Bestimmen der aktuellen Güte der Reihenerfassung anhand des von der Kamera erzeugten Bildsignals und/oder der von der Kamera erzeugten Bildaufnahmen durch die elektronische Steuerungseinrichtung. Alternativ oder zusätzlich ermittelt die elektronische Steuerungseinrichtung die situationsspezifische und in Bezug auf die Reihenerfassung optimierte Höhe und/oder Neigung der Kamera auf Grundlage der bestimmten aktuellen Güte der Reihenerfassung.

In einer weiteren bevorzugten Ausführungsform des erfindungsgemäßen Verfahrens bewertet die elektronische Steuerungseinrichtung beim Bestimmen der aktuellen Güte der Reihenerfassung die Erfassungsqualität bei der Pflanzenerfassung, insbesondere durch einen Abgleich des von der Kamera erzeugten Bildsignals und/oder der von der Kamera erzeugten Bildaufnahme mit Referenzdaten. Die Referenzdaten können dabei Beispielbilder von Pflanzen sein. Die Beispielbilder können die Pflanzen in unterschiedlichen Wuchshöhen zeigen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel eines erfindungsgemäßen Systems zum Erfassen von Pflanzenreihen auf einer landwirtschaftlichen Nutzfläche in einer schematischen Darstellung;
- Fig. 2: ein Ausführungsbeispiel einer erfindungsgemäßen Bearbeitungsmaschine in einer ersten Situation in einer schematischen Darstellung; und
- Fig. 3: die in der Fig. 2 abgebildete Bearbeitungsmaschine in einer zweiten Situation in einer schematischen Darstellung.

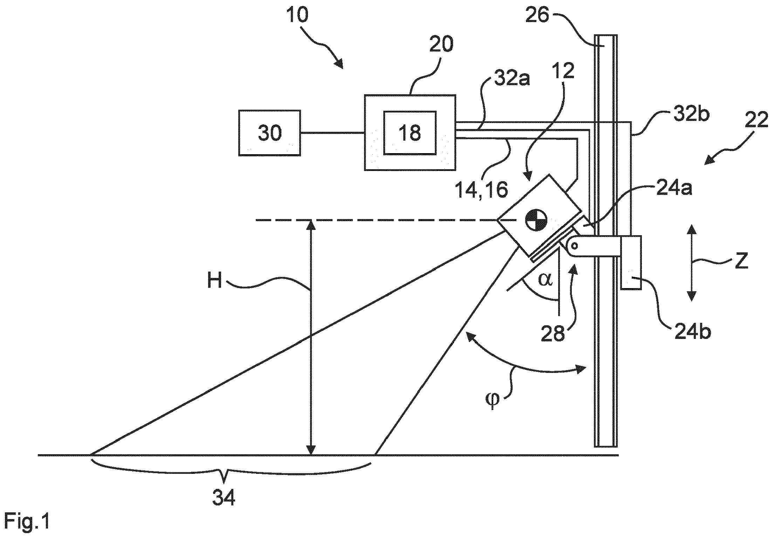

Die Fig. 1 zeigt ein System 10 zum Erfassen von Pflanzenreihen R1-R12 auf einer landwirtschaftlichen Nutzfläche. Das System 10 kann beispielsweise Bestandteil einer landwirtschaftlichen Bearbeitungsmaschine 100 und/oder eines landwirtschaftlichen Fahrzeugs 202, wie beispielsweise eines Traktors, sein.

Das System 10 umfasst eine Kamera 12, welche auf einen Pflanzenbestand B auszurichten ist und welche ein den Pflanzenbestand B betreffendes Bildsignal 14 und/oder den Pflanzenbestand B betreffende Bildaufnahmen 16 erzeugt. Die Kamera 12 ist über eine signalleitende Verbindung mit einer elektronischen Auswerteeinheit 18 einer elektronischen Steuerungseinrichtung 20 verbunden. Die elektronische Auswerteeinheit 18 wertet das von der Kamera 12 erzeugte Bildsignal 14 und/oder die von der Kamera 12 erzeugten Bildaufnahmen 16 zum Erfassen des Verlaufs und/oder der Position von Pflanzenreihen R1-R12 auf einer landwirtschaftlichen Nutzfläche aus.

Die Kamera 12 ist ferner mit einer Verstelleinrichtung 22 gekoppelt, mittels welcher die Neigung α und die Höhe H der Kamera 12 veränderbar ist. hierzu weist die Verstelleinrichtung zwei als Elektromotoren ausgebildete Verstellantriebe 24a, 24b auf.

Mittels der Verstelleinrichtung 24a kann der Anstellwinkel, also die Neigung, der Kamera 12 in der Bewegungsrichtung ϕ angepasst werden. Somit erlaubt der Verstellantrieb 24a die Verschiebung des Sichtfelds 34 der Kamera 12. Über eine geeignete Ansteuerung des Verstellantriebs 24a kann die Kamera 12 beispielsweise so ausgerichtet werden, sodass die optische Achse der Kameraoptik steil nach unten weist und ein sich unmittelbar vor der Kamera 12 befindlicher Bereich des Pflanzenbestands B im Sichtfeld 34 der Kamera 12 liegt. Über den Verstellantrieb 24a kann die Kamera 12 alternativ so eingestellt werden, dass die optische Achse der Kameraoptik flach nach vorne weist, sodass weiter entfernte Pflanzen bzw. Pflanzenreihen R1-R12 im Sichtfeld 34 der Kamera 12 liegen.

Mittels des Verstellantriebs 24b kann die Kamera 12 in der vertikalen Bewegungsrichtung z nach oben und nach unten verfahren werden. Hierzu ist die Kamerahalterung 28, an welcher die Kamera 12 befestigt ist, an einer Strebe 26 geführt. Mittels des Verstellantriebs 24b kann die Kamerahalterung 28 entlang der Strebe 26 bewegt werden. Durch eine Höhenverstellung der Kamera 12 kommt es ebenfalls zur Änderung des Sichtfeldes 34.

Die Kamera 12 ist über signalleitende Verbindungen mit der elektronischen Steuerungseinrichtung 20 verbunden. Über die signalleitenden Verbindungen kann die elektronische Steuerungseinrichtung 20 Steuersignale 32a, 32b an die Verstellantriebe 24a, 24b der Verstelleinrichtung 22 übermitteln. Die elektronische Steuerungseinrichtung 20 ist dazu eingerichtet, durch eine Ansteuerung der Verstellantriebe 24a, 24b selbsttätig die Einstellung einer situationsspezifischen und in Bezug auf die Reihenerfassung optimierten Höhe H und Neigung α der Kamera 12 zu veranlassen. Das System 10 erlaubt somit die automatische Anpassung des Blickwinkels und der Höhe H der Kamera 12 während eines Bearbeitungsvorgangs. Durch die elektronische Steuerungseinrichtung 20 werden die optimalen Bedingungen für die Einstellung der Kamera 12 ermittelt und durch eine entsprechende automatisierte Anpassung eingestellt.

Die Neigung α bzw. die Höhe H der Kamera 12 über dem Boden wird also durch eine geeignete Ansteuerung der Verstellantriebe 24a, 24b während des Bearbeitungsvorgangs auf die aktuellen Bedingungen angepasst.

Die situationsspezifische und die in Bezug auf die Reihenerfassung optimierte Kamerahöhe H und Kameraneigung α kann die elektronische Steuerungseinrichtung 20 beispielsweise auf Grundlage von einer oder mehreren den Pflanzenbestand B betreffenden aktuellen Bestandseigenschaften und/oder auf Grundlage von einer oder mehreren die Pflanzen des Pflanzenbestands B betreffenden aktuellen Pflanzeneigenschaften ermitteln. Die Bestandseigenschaften können beispielsweise den Reihenverlauf in Fahrtrichtung F betreffen. Beispielsweise könnte der Blickwinkel der Kamera 12 in einem Bereich mit geradlinigem Reihenverlauf weit nach vorne gerichtet werden, sodass möglichst viele Pflanzen erfasst und somit eine zuverlässige Reihenführung umgesetzt wird. Sobald ein kurviger Reihenverlauf von der Kamera 12 erfasst wird, könnte die Kameraneigung derart verändert werden, dass die optische Achse der Kameraoptik steil nach unten weist, sodass die Pflanzenpositionen und somit die Reihenentwicklung im Nahbereich der Kamera zuverlässiger erfasst werden.

Ferner kann die elektronische Steuerungseinrichtung 20 dazu eingerichtet sein, die Höhe H der Kamera 12 in Abhängigkeit der aktuellen Bestandshöhe des Pflanzenbestandes B und/oder in Abhängigkeit der aktuellen Wuchshöhe der Pflanzen des Pflanzenbestandes B einzustellen. Die Bestandseigenschaften und/oder die Pflanzeneigenschaften, auf deren Grundlage die Einstellung der Kamerahöhe H und die Kameraneigung α erfolgt, wird von der elektronischen Steuerungseinrichtung auf Grundlage des von der Kamera 12 erzeugten Bildsignals 14 und/oder auf Grundlage der von der Kamera 12 erzeugten Bildaufnahmen 16 ermittelt.

Neben den Bestands- und Pflanzeneigenschaften kann die elektronische Steuerungseinrichtung 20 auch die aktuelle Güte der Reihenerfassung bei der Ansteuerung der Verstellantriebe 24a, 24b berücksichtigen. Hierzu ist die elektronische Steuerungseinrichtung 20 dazu eingerichtet, die aktuelle Güte der Reihenerfassung anhand des von der Kamera 12 erzeugten Bildsignals und/oder der von der Kamera 12 erzeugten Bildaufnahmen 16 zu bestimmten und die situationsspezifische und in Bezug auf die Reihenerfassung optimierte Kamerahöhe H und Kameraneigung α auf Grundlage der aktuellen Güte der Reihenerfassung zu ermitteln. Zum Bestimmen der aktuellen Güte der Reihenerfassung bewertet die elektronische Steuerungseinrichtung 20 die Erfassungsqualität bei der Pflanzenerfassung. Dies erfolgt über einen Abgleich des von der Kamera 12 erzeugten Bildsignals 14 und/oder der von der Kamera 12 erzeugten Bildaufnahmen 16 mit Referenzdaten. Die Referenzdaten sind auf dem Datenspeicher 30 des Systems 10 hinterlegt und sind Beispielbilder der Pflanzen des Pflanzenbestandes B. Die elektronische Steuerungseinrichtung 20 vergleicht die Beispielbilder im Rahmen der Bewertung der Erfassungsqualität mit den Bildaufnahmen 16 der Kamera. Auf Basis des Bildvergleichs wird ein Matchfaktor berechnet, mittels welchem die Erfassungsqualität bei der Pflanzenerfassung bewertet werden kann. Wenn die elektronische Steuerungseinrichtung 20 eine unzureichende Erfassungsqualität feststellt, wird die Kameraneigung α und die Kamerahöhe H nach empirisch ermittelten Prozeduren angepasst.

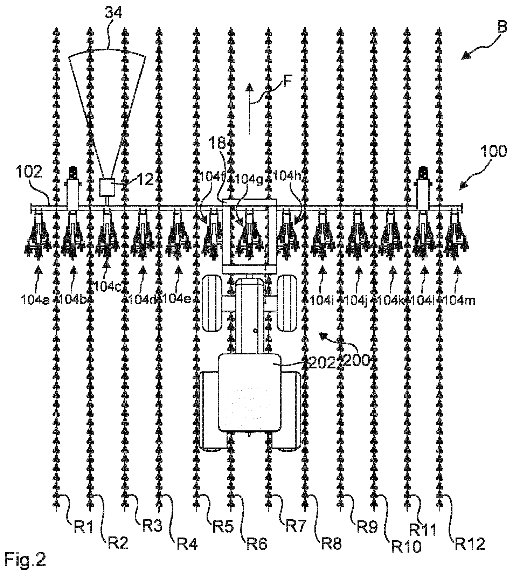

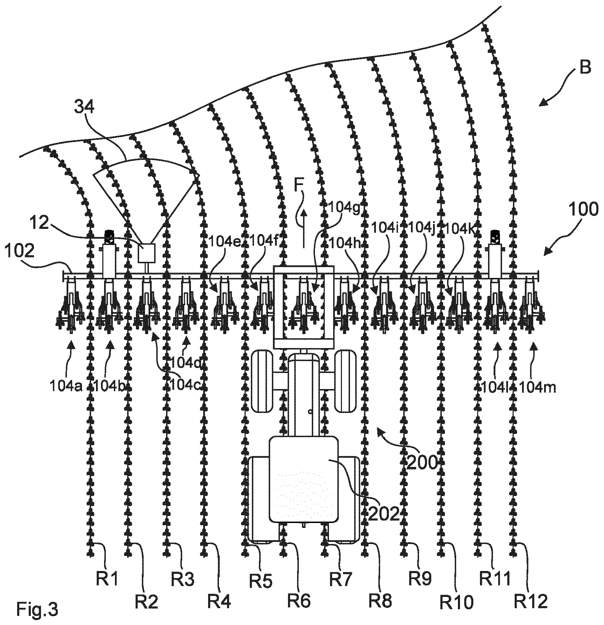

Die Fig. 2 und 3 zeigen ein Gespann 200 aus einem als Traktor ausgebildeten Fahrzeug 202 und einer an dem Fahrzeug 202 angebauten Bearbeitungsmaschine 100. Die Bearbeitungsmaschine 100 ist ein Frontanbaugerät, nämlich eine landwirtschaftliche Hacke. Die Bearbeitungsmaschine 100 weist einen Geräterahmen 102 auf, an welchem eine Mehrzahl von Bearbeitungswerkzeugen 104a-104m quer zur Fahrtrichtung F angeordnet sind. Zumindest die Kamera 12 eines Systems 10 zum Erfassen von Pflanzenreihen R1-R12 ist an dem Geräterahmen 102 der Bearbeitungsmaschine 100 angeordnet. In anderen Ausführungsformen kann die Kamera 12 oder das gesamte System 10 auch an dem Fahrzeug 202 angeordnet sein, beispielsweise, wenn es sich bei der Bearbeitungsmaschine 100 um ein Heckanbaugerät handelt.

Bei der in der Fig. 2 dargestellten Situation liegt ein geradliniger Reihenverlauf vor. Der geradlinige Reihenverlauf wird von der elektronischen Auswerteeinheit 18 des Systems 10 auf Grundlage des Bildsignals 14 und/oder der Bildaufnahmen 16 der Kamera 12 erfasst. Aufgrund des geradlinigen Reihenverlaufs eignet sich eine vergleichsweise große Kamerahöhe H und eine vergleichsweise flache Ausrichtung der Kamera 12 in Fahrtrichtung F nach vorne besonders zur zuverlässigen Erfassung des Verlaufs und der Position der Pflanzenreihen R1-R12. Somit stellt die Steuerungseinrichtung 20 des Systems

10 in dieser Bearbeitungssituation eine entsprechende Kamerahöhe H und eine entsprechende Kameraneigung α durch die Ansteuerung der Verstellantriebe 24a, 24b der Verstelleinrichtung 22 selbsttätig ein.

In der in der Fig. 3 dargestellten Situation nähert sich das Gespann 200 aus Fahrzeug 202 und Bearbeitungsmaschine 100 einem Kurvenbereich, in welchem die Pflanzenreihen R1-R12 dem Kurvenverlauf folgen. Die elektronische Auswerteeinheit 18 des Systems 10 erfasst über das Bildsignal 14 und/oder die Bildaufnahmen 16 der Kamera 12 den kurvenförmigen Verlauf der in Fahrtrichtung F vor dem Gespann 200 liegenden Pflanzenreihen R1-R12. Bei einem kurvenförmigen Reihenverlauf ist es vorteilhaft, wenn das Sichtfeld 34 der Kamera 12 auf einen Abschnitt unmittelbar vor der Bearbeitungsmaschine 100 gerichtet ist. Die Steuerungseinrichtung 20 veranlasst also selbsttätig die Ansteuerung der Verstellantriebe 24a, 24b, damit eine für die vorliegende Situation für die Reihenerfassung optimierte Kamerahöhe H und Kameraneigung α eingestellt wird. Bei Erfassung eines kurvigen Abschnitts würde die Steuerungseinrichtung also den Anstellwinkel α der Kamera 12 so verändern, dass die optische Achse der Kameraoptik steil nach unten weist und der Aufnahmebereich der Kamera 12 auf den unmittelbar vor dem der Kamera 12 befindlichen Pflanzenbestand B gerichtet ist. Die Kamerahöhe H kann unter Berücksichtigung der Wuchshöhe der Pflanzen des Pflanzenbestandes B verringert werden, sodass detailreichere Aufnahmen der Pflanzen des Pflanzenbestandes B durch die Kamera 12 möglich sind.

### Bezugszeichenliste

- 10: System
- 12: Kamera
- 14: Bildsignal
- 16: Bildaufnahmen
- 18: Auswerteeinheit
- 20: Steuerungseinrichtung
- 22: Verstelleinrichtung
- 24a, 24b: Verstellantriebe
- 26: Strebe
- 28: Kamerahalterung
- 30: Datenspeicher
- 32a, 32b: Steuersignale
- 34: Sichtfeld

- 100: Bearbeitungsmaschine
- 102: Geräterahmen
- 104a-104m: Bearbeitungswerkzeuge

- 200: Gespann
- 202: Fahrzeug

- B: Pflanzenbestand
- F: Fahrtrichtung
- H: Kamerahöhe
- R1-R12: Pflanzenreihen
- z: Bewegungsrichtung
- **α**: Neigung
- **ϕ**: Bewegungsrichtung

## Patentansprüche

1. System (10) zum Erfassen von Pflanzenreihen (R1-R12) auf einer landwirtschaftlichen Nutzfläche, mit
- zumindest einer Kamera (12), welche dazu eingerichtet ist, auf einen Pflanzenbestand (B) ausgerichtet zu werden und ein den Pflanzenbestand (B) betreffendes Bildsignal (14) und/oder den Pflanzenbestand (B) betreffende Bildaufnahmen (16) zu erzeugen;
- einer Verstelleinrichtung (22), welche einen oder mehrere Verstellantriebe (24a, 24b) aufweist, mittels welchen die Neigung (a) und/oder Höhe (H) der Kamera (12) veränderbar ist; und
- einer elektronischen Auswerteeinheit (18), welche dazu eingerichtet, das von der Kamera (12) erzeugte Bildsignal (14) und/oder die von der Kamera (12) erzeugten Bildaufnahmen (16) zum Erfassen des Verlaufs und/oder der Position von Pflanzenreihen (R1-R12) auf einer landwirtschaftlichen Nutzfläche auszuwerten;
**gekennzeichnet durch** eine elektronische Steuerungseinrichtung (20), welche dazu eingerichtet ist, durch eine Ansteuerung des einen oder der mehreren Verstellantriebe (24a, 24b) der Verstelleinrichtung (22) selbsttätig die Einstellung einer situationsspezifischen und in Bezug auf die Reihenerfassung optimierten Höhe (H) und/oder Neigung (a) der Kamera (12) zu veranlassen.

2. System (10) nach Anspruch 1,
**dadurch gekennzeichnet, dass** die elektronische Steuerungseinrichtung (20) dazu eingerichtet ist, die situationsspezifische und in Bezug auf die Reihenerfassung optimierte Höhe (H) und/oder Neigung (a) der Kamera (12)
- auf Grundlage von einer oder mehreren den Pflanzenbestand (B) betreffenden aktuellen Bestandseigenschaften, und/oder
- auf Grundlage von einer oder mehreren die Pflanzen des Pflanzenbestandes (B) betreffenden aktuellen Pflanzeneigenschaften zu ermitteln.

3. System (10) nach Anspruch 2,
**dadurch gekennzeichnet, dass** die elektronische Steuerungseinrichtung (20) dazu eingerichtet ist, die eine oder die mehreren Bestandseigenschaften und/oder die eine oder die mehreren Pflanzeneigenschaften auf Grundlage des von der Kamera (12) erzeugten Bildsignals (14) und/oder auf Grundlage der von der Kamera (12) erzeugten Bildaufnahmen (16) zu ermitteln.

4. System (10) nach Anspruch 2 oder 3,
**gekennzeichnet durch** einen oder mehrere Sensoren zur Bewuchserfassung, wobei die elektronische Steuerungseinrichtung (20) dazu eingerichtet ist, die eine oder die mehreren Bestandseigenschaften und/oder die eine oder die mehreren Pflanzeneigenschaften auf Grundlage der von dem einen oder den mehreren Sensoren zur Verfügung gestellten Sensordaten zu ermitteln.

5. System (10) nach einem der vorstehenden Ansprüche,
**dadurch gekennzeichnet, dass** die elektronische Steuerungseinrichtung (20) dazu eingerichtet ist, die aktuelle Güte der Reihenerfassung anhand des von der Kamera (12) erzeugten Bildsignals (14) und/oder der von der Kamera (12) erzeugten Bildaufnahmen (16) zu bestimmen und die situationsspezifische und in Bezug auf die Reihenerfassung optimierte Höhe (H) und/oder Neigung (a) der Kamera (12) auf Grundlage der aktuellen Güte der Reihenerfassung zu ermitteln.

6. System (10) nach Anspruch 5,
**dadurch gekennzeichnet, dass** die elektronische Steuerungseinrichtung (20) dazu eingerichtet ist, zum Bestimmen der aktuellen Güte der Reihenerfassung die Erfassungsqualität bei der Pflanzenerfassung zu bewerten, insbesondere durch einen Abgleich des von der Kamera (12) erzeugten Bildsignals (14) und/oder der von der Kamera (12) erzeugten Bildaufnahmen (16) mit Referenzdaten.

7. Landwirtschaftliche Bearbeitungsmaschine (100), mit
- einem System (10) zum Erfassen von Pflanzenreihen (R1-R12) auf einer landwirtschaftlichen Nutzfläche;
**dadurch gekennzeichnet, dass** das System (10) nach einem der vorstehenden Ansprüche ausgebildet ist.

8. Verfahren zum Erfassung von Pflanzenreihen (R1-R12) auf einer landwirtschaftlichen Nutzfläche, insbesondere mittels eines Systems (10) nach einem der vorstehenden Ansprüche, mit den Schritten:
- Erzeugen von einem einen Pflanzenbestand (B) betreffenden Bildsignal (14) und/oder einen Pflanzenbestand (B) betreffenden Bildaufnahmen (16) mittels zumindest einer auf den Pflanzenbestand (B) ausgerichteten Kamera (12); und
- Auswerten des von der Kamera (12) erzeugten Bildsignals (14) und/oder der von der Kamera (12) erzeugten Bildaufnahmen (16) zum Erfassen des Verlaufs und/oder der Position von Pflanzenreihen (R1-R12) auf einer landwirtschaftlichen Nutzfläche mittels einer elektronischen Auswerteeinheit (18),
**gekennzeichnet durch** den Schritt:
- selbsttätiges Veranlassen der Einstellung einer situationsspezifischen und in Bezug auf die Reihenerfassung optimierten Höhe (H) und/oder Neigung (a) der Kamera (12) mittels einer elektronischen Steuerungseinrichtung (20) durch Ansteuern von einem oder mehreren Verstellantrieben (24a, 24b) einer Verstelleinrichtung (22), mittels welchen die Neigung (a) und/oder Höhe (H) der Kamera (12) veränderbar ist.

9. Verfahren nach Anspruch 8,
**gekennzeichnet durch** zumindest einen der folgenden Schritte:
- Ermitteln von einer oder mehreren den Pflanzenbestand (B) betreffenden aktuellen Bestandseigenschaften;
- Ermitteln von einer oder mehreren die Pflanzen des Pflanzenbestandes (B) betreffenden aktuellen Pflanzeneigenschaften;
- Ermitteln der situationsspezifischen und in Bezug auf die Reihenerfassung optimierten Höhe (H) und/oder Neigung (a) der Kamera (12) durch die elektronische Steuerungseinrichtung (20) auf Grundlage der einen oder der mehreren Bestandseigenschaften und/oder der einen oder der mehreren Pflanzeneigenschaften.

10. Verfahren nach Anspruch 8 oder 9,
**gekennzeichnet durch** zumindest einen der folgenden Schritte:
- Bestimmen der aktuellen Güte der Reihenerfassung anhand des von der Kamera (12) erzeugten Bildsignals (14) und/oder der von der Kamera (12) erzeugten Bildaufnahmen (16) durch die elektronische Steuerungseinrichtung (20);
- Ermitteln der situationsspezifischen und in Bezug auf die Reihenerfassung optimierten Höhe (H) und/oder Neigung (a) der Kamera (12) auf Grundlage der bestimmten aktuellen Güte der Reihenerfassung durch die elektronische Steuerungseinrichtung (20).

11. Verfahren nach Anspruch 10,
**dadurch gekennzeichnet, dass** die elektronische Steuerungseinrichtung (20) beim Bestimmen der aktuellen Güte der Reihenerfassung die Erfassungsqualität bei der der Pflanzenerfassung bewertet, insbesondere durch einen Abgleich des von der Kamera (12) erzeugten Bildsignals (14) und/oder der von der Kamera (12) erzeugten Bildaufnahmen (16) mit Referenzdaten.
